# EUROPEAN PATENT SPECIFICATION

(11) **EP 2 843 830 B1**
(45) Date of publication and mention of the grant of the patent: **26.10.2016**
(21) Application number: 13004294.8
(22) Date of filing: 30.08.2013
(51) Int. Cl.: G05B 19/19

(54) **Drive controller and method to modify an output signal of a drive controller**
Antriebssteuerung und Verfahren zur Modifizierung eines Ausgangssignals einer Antriebssteuerung
Contrôleur d'entraînement et procédé pour modifier un signal de sortie d'un dispositif de commande d'entraînement

(43) Date of publication of application: 04.03.2015
(73) Proprietor: Num Industry Alliance AG, 9053 Teufen (CH)
(72) Inventor: Stehle, Ferdinando, 20151 Milano (IT); von Arx, Robert, 8966 Oberwil-Lieli (CH); von Rüti, Peter, 9052 Niederteufen (CH); Perroud, Sébastien, 3098 Köniz (CH)
(74) Representative: Börjes-Pestalozza, Henrich

(56) References cited:
- EP-A1- 1 432 112

## Description

The invention concerns a drive controller, comprising a position setpoint signal input, a pulse width modulated signal output, a signal path connecting the position setpoint signal input to the pulse width modulated signal output, and a first feedback loop, the first feedback loop acting, at a feedback point, on a signal flow in the signal path.

Further, the invention concerns a method to modify an output signal of a drive controller, wherein a position setpoint input signal is processed along a signal path of the drive controller to yield a pulse width modulated output signal, wherein a first feedback signal is fed back, at a first feedback point, to a signal flow in the signal path.

Drive controllers are known to control electric motors, for example synchronous or asynchronous electric motors, according to commands delivered from a numerical control provided to a position setpoint signal input of the drive controller. Such motors may be used for driving machining tools or the like to machine or make manufacturing products.

The object of the invention is to improve the diversity of achievable shapes and patterns.

According to the present invention, there is provided the drive controller of claim 1 by which the afore-mentioned problem is solved. In particular the invention proposes a drive controller as described in the beginning which, in addition, is characterized in that the signal path has at least one interaction point, the interaction point being arranged in a direction of the signal flow at or downstream of the first feedback point, in that a signal generation means is designed to generate an arbitrary signal sequence, and in that the signal generation means is connected to the interaction point to impose the arbitrary signal sequence on the signal flow. Here, arbitrariness may be achieved by any non-deterministic sequence. By being able to interact on the signal path using an arbitrary signal sequence, arbitrary modifications of the forms and/or patterns to be produced may be created. By imposing the arbitrary signal sequence directly within the drive controller's signal path, very tiny modifications of the forms and/or patterns to be produced may be accomplished compared to a modification of the controlling signal in a CNC. Those tiny modifications are difficult to detect properly for reproduction using standard CNC reproduction methods. Thus, the modified manufacturing products are difficult to copy. However, using optical measurement methods, the modifications can be detected. Hence, original manufacturing products and copies thereof may be discerned. Imposing the arbitrary signal sequence on the signal path may be done by addition, subtraction, multiplication, or other mathematical operations.

Therefore, with the invention, it is possible to mark manufacturing products in a way that is hard to copy. Manufacturing products can be given an individual character.

According to one advantageous feature of the invention, it is provided that the signal generation means is designed to generate a pseudorandom and/or random sequence. Thus, particular non-deterministic sequences may be provided for use as arbitrary signal sequences.

According to one advantageous feature of the invention, it is provided that the signal generation means comprises a random and/or pseudorandom generator. Thus, an easy way to generate pseudorandom and/or random sequences is provided.

According to one advantageous feature of the invention, it is provided that the signal generation means comprises a measuring sensor designed to measure at least one physical quantity. Thus, a robust means to generate random sequences is provided, as the measured values tend to be distributed randomly around some mean or reference value. It is particularly favorable if a random and/or pseudorandom generator, for example said random and/or pseudorandom generator, comprises said measuring sensor. Genuinely random sequences may be generated using a sequence of measured values. It is particularly favorable if the at least one physical quantity is taken from the group of a current, a voltage, a temperature, a speed, a magnetic field. Thus, physical quantities that occur naturally in electric machines may be used for generation of arbitrary signal sequences. In particular, the physical quantity may be a current in one phase of the modulated pulse width signal output. Thus, a single quantity which can be measured in the vicinity of the drive controller may be used. Moreover, the generation and imposition of the arbitrary signal sequence may be hidden from the standard user.

According to one advantageous feature of the invention, it is provided that the signal generation means comprises an analog to digital converter. Thus, the process of digitization of analogue measurement values may be used for generation of random sequences. For sufficiently high sampling rates used for digitization, arbitrary fluctuations of the measured physical quantity due to measurement errors or uncertainties, will give rise to random-like sequences in the converted digital numbers. It is particularly favorable if a random and/or pseudorandom generator, for example said random and/or pseudorandom generator, comprises said analog to digital converter. Thus, an output signal of the converter may be used to provide said random or pseudorandom sequence.

According to one advantageous feature of the invention, it is provided that the signal generation means comprises an extracting means designed to extract a predetermined number of digits from a multiple-digit number. Thus, the invention takes advantage of the fact that lower digits in sequences of multiple-digit numbers very often constitute arbitrary signal sequences as those digits correspond to a levels below or beyond measurement precision. It is particularly favorable if a random and/or pseudorandom generator, for example said random and/or pseudorandom generator, comprises said extracting means. Thus, an easy way to generate random or pseudorandom sequences is provided. No external input for the arbitrary signal sequence is necessary. Hence, the functioning of the invention may be disguised and hidden from the uninformed user.

According to one advantageous feature of the invention, it is provided that the first feedback loop is a position feedback loop. Thus, the modification of the signals in the signal path may be carried out after the signals have passed the position feedback point. Hence, the arbitrary signal sequence produces dithering of the movement commanded by a CNC.

The feedback loop may be of matrix type, feeding back the position, speed and/or acceleration (torque) feedback signals at one common feedback point.

According to one advantageous feature of the invention, it is provided that a second feedback loop is designed to act, at a second feedback point in the signal path, on the signal flow. Thus, the arbitrary signal sequence may be imposed on the signal path before or after the second feedback point. Different results for the modification of the manufactured products may be achieved depending on where in the signal path the arbitrary signal sequence is imposed. Said second feedback loop may be a speed feedback loop. Thus, a modification of the control signal on the level of speed corrections is possible.

In this connection, the at least one interaction point may be arranged, in a direction of the signal flow at or downstream of the second feedback point. Said direction may be given by the direction of the signal flow described above. Thus, a modification of the signal by an arbitrary signal sequence may be imposed on the loop that controls the speed signal. This will result in tiny fluctuations in the speed necessitated to accomplish a predetermined position. These fluctuations are smaller than those achieved by direct modification of the signal in the position feedback loop.

According to one advantageous feature of the invention, it is provided that a third feedback loop is designed to act, at a third feedback point in the signal path, on the signal flow. Said third feedback loop may be a current and/or torque feedback loop. Thus, a modification of the control signal on the level of current and/or torque (acceleration) corrections is possible. It is particularly favorable if the third feedback loop is a Q-current feedback loop. The Q-current, or quadrature current, constitutes a decent means to impose fluctuations on the acceleration commanded by the drive controller.

In this connection, it is provided that the at least one interaction point is arranged, in a direction of the signal flow, at or downstream of the third feedback point. Said direction may be given by the direction of the signal flow described above. One key advantage is that imposing the arbitrary signal sequence on the signal flow in the current and/or torque feedback loop gives rise to fluctuations or dithering in the acceleration commanded by the drive controller. These acceleration fluctuations result in still smaller modifications in the shape or pattern of manufactured products than those achieved by imposing the arbitrary signal sequence on the signal flow in the speed or position feedback loops.

According to the present invention, there is provided a solution which, for a method as described in the beginning, is characterized in that an arbitrary signal sequence is generated and imposed on the signal flow at or downstream of the first feedback point. Thus, it is possible to create individual patterns and/or forms with arbitrary modifications. With the invention, it is possible to add an individual character to each manufactured product such that products manufactured by identical processes will become distinguishable from each other. By recording, for instance by optical recording using photographs, of the manufactured forms and/or patterns after manufacturing it is thus possible to distinguish genuine products from counterfeits and/or unauthorized copies. It is advantageous if the recorded shapes and/or patterns are saved for later comparison.

According to one advantageous feature of the invention, it is provided that the arbitrary signal sequence is generated as a pseudorandom and/or random sequence. The use of pseudorandom and/or random sequences is particularly useful as an output signal sequence. It is difficult to remodel pseudorandom and/or rendered sequences as there is practically no algorithm involved in generating the given pseudorandom and/or random sequences.

According to one advantageous feature of the invention, it is provided that the arbitrary signal sequence is generated from an output signal of a measuring sensor designed to measure a physical quantity. Thus, arbitrary signal sequences may be generated without recurrence to a mathematical algorithm. This makes it very difficult to copy the results of such an arbitrary modification.

According to one advantageous feature of the invention, it is provided that generating the arbitrary signal sequence comprises the step of converting an output signal of a sensor, for example said output signal of said sensor designed to measure a physical quantity, to a number, in particular a multiple-digit number. By setting, for example, a digitization level below a given physical measurement precision, a very elegant way to generate pseudorandom and/or rendered sequences is provided.

According to one advantageous feature of the invention, it is provided that generating the arbitrary signal sequence comprises the step of extracting a predetermined number of digits from a multiple-digit number, for example from said multiple-digit number. It is particularly favorable if the step comprises extracting a lower part of digits from the multiple-digit number, for instance a least significant bit. Thus, numbers for a random sequence can be readily obtained.

According to one advantageous feature of the invention, it is provided that a second feedback signal is fed back, at a second feedback point, downstream, in the direction of the signal flow, of the first feedback point to the signal flow in the signal path, wherein the arbitrary signal sequence is generated and imposed on the signal flow at or downstream of the second feedback point. Thus, more than one interaction point is available for modifying the signal flow according to the invention. Preferably, the second feedback signal is a time derivative of the first feedback signal or computed from a time derivative of the first feedback signal.

According to one advantageous feature of the invention, it is provided that a third feedback signal is fed back, at a third feedback point, downstream in the direction of the signal flow, of the second feedback point to the signal flow in the signal path, wherein the arbitrary signal sequence is generated and imposed on the signal flow at or downstream of the third feedback point. Thus, yet another point to interact with the signal path is available. Preferably, the third feedback signal is a second time derivative of the first feedback signal or computed from a second time derivative of the first feedback signal. Alternatively, the third feedback signal is a time derivative of the second feedback signal or computed from a time derivative of the second feedback signal.

In the case of nested feedback loops, and also in the case of matrix type feedback loops, it is particularly favorable if the arbitrary signal sequence is imposed on a part of the signal flow which is characterized by being a first and/or second time derivatives of the input signal. Thus very tiny modifications in the movement controlled by the drive controller can be achieved.

According to one advantageous feature of the invention, it is provided that the first, second, or third feedback signal is one element out of the group of position feedback signal, speed feedback signal, and current, in particular Q-current, and/or torque feedback signal. Thus, existing feedback loops of the drive controller may be used for imposing the arbitrary signal sequence on the signal flow. This is particularly favorable if the arbitrary signal sequence is derived from a physical quantity related to the motion controlled by the drive controller, for instance as described above.

The pulse width signal output may be a single phase or three phase output delivering motor currents.

It is particularly advantageous if, in a method according to the invention, a drive controller according to the invention, in particular as described above and/or as claimed in any one of the claims directed to a drive controller, is used.

The invention will now be described in more detail on the basis of an illustrative embodiment, although it is not limited to this illustrative embodiment. Further illustrative embodiments are obtained by combination of the features of one or more claims with each other and/or with one or more features of the illustrative embodiment.

In the drawing:

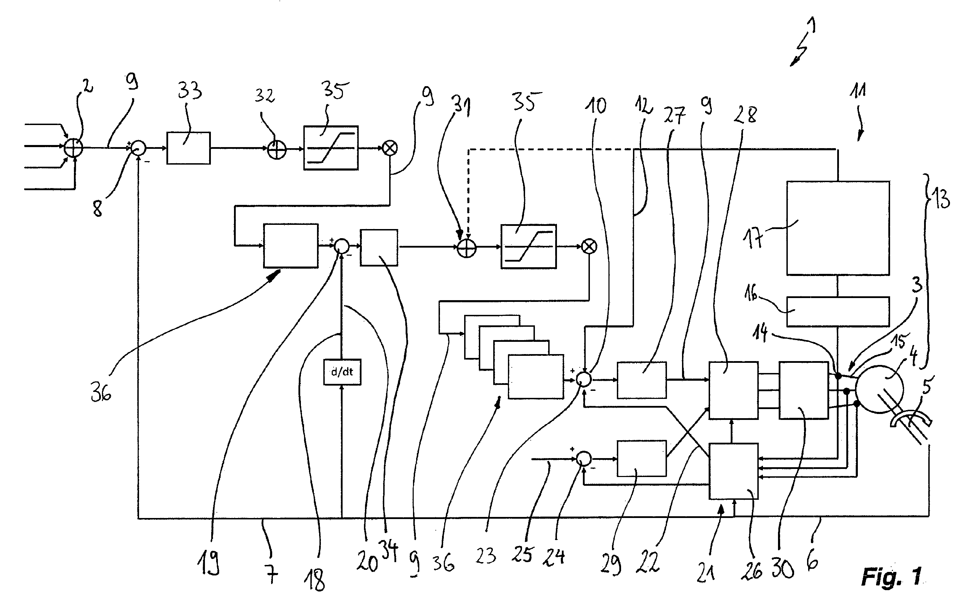

- Fig. 1: shows a simplified flow chart of a drive controller according to the invention.

Figure 1 shows, in a schematized flowchart, a drive controller according to the invention, designated as a whole by reference number 1.

The drive controller 1 has a position setpoint signal input 2, where a position setpoint is provided from some CNC. The CNC is not shown for simplification of the drawing.

The drive controller has a pulse width modulated signal output 3. The pulse width modulated signal output 3 delivers currents and hence energizes an electric motor 4. The motor 4 is not necessarily a part of the drive controller 1 but may be just attached and/or connected to it.

According to the currents delivered by the pulse width modulated signal output 3, the electric motor for 4 drives a shaft 5 or other moving / rotating element. From the motion of this draft 5 or other element, an actual position value 6 is taken.

A first feedback loop 7, in this case a position feedback loop, delivers this actual position value 6 to the first feedback point 8. At this first feedback point 8, the actual position value 6 is, as a first feedback signal, imposed on a signal flow in a signal path 9 that connects the position setpoint signal input 2 to the pulse width modulated signal output 3. Feeding have the actual position value 6 to the signal path 9 is well-known in the art.

In the signal path 9, there is provided an interaction point 10.

In the direction of flow of the signal path 9, the interaction point 10 is located downstream of the first feedback point 8.

Signal generation means, designated as a whole by reference number 11, generate arbitrary signal sequences 12 which can be imposed on the signal path 9 at the interaction point 10.

The imposed arbitrary signal sequences 12 on the signal path 9 lead to modulations or modifications at the pulse width modulated signal output 3. In turn, this results in small modulations or modifications or dithering of the movement of the shaft 5 or other element of driven by the electric motor 4.

The signal generation means 11 comprises a random and/or pseudorandom generator 13 described in more detail below.

The random and/or pseudorandom generator 13 comprises measuring sensor 14. While the rest of the signal path 9 in this embodiment is designed for processing digital values, the pulse width modulated signal output 3 has analog output values, namely the current in each phase 15.

The measuring sensor 14 is designed to measure the current in one phase 15.

In other embodiments, instead of or in addition to the current, a voltage, a temperature, a speed, and/or a magnetic field in the motor 4, or any other available physical quantity is or may be measured.

The random and/or pseudorandom generator 13 of the embodiment according to figure 1 has an analog to digital converter 16. The analog to digital converter 16 is designed to convert an output value of the measuring sensor 14 into a digital number. The setting of the digitization is such that at least one bit will be below measurement and/or controlling precision.

This digital number is communicated to an extracting means 17 of the random and/or pseudorandom generator 13. In the extracting means 17, the lowest digits, for instance the least significant bit, of the digitized measurement value coming from the measuring sensor 14 is extracted.

Since this process is performed continually, as sequence of random and/or pseudorandom numbers is generated as an arbitrary signal sequence 12.

In figure 1, it can be seen that a time derivative is computed from the actual position value 6. Thus an actual speed value 18 is computed. This actual speed value 18 is fed back, at the second feedback point 19, to the signal path 9.

Thus, a second feedback loop 20 is created, refining the feedback properties of the drive controller 1.

It can be seen that the interaction point 10, where the arbitrary signal sequence 12 is imposed on the signal path 9, is arranged downstream of the second feedback point 19.

Using a 3/2 Park transformation in a Park transformation device 21 known in the art, a third feedback loop 22 is created. Park transformations, also known as direct-quadrature-zero transformations, are known in the field of analysis and/or controlling of three-phase circuits. For this, the Park transformation device 21 has a 3/2 Park transformation unit 26.

In this third feedback loop 22, a Q-current Iq, derived from the actual position value 6, is fed back, at the third feedback point 23, to the signal path 9. This third feedback loop 23 thus constitutes a torque or current feedback loop. Other ways to provide a feedback signal correlating with the torque or current in the motor 4 may be contemplated. It is known that the torque or current relates to an acceleration of the motion of the shaft 5 or other element.

A D-current Id is, at the fourth feedback point 24, fed back to modify a D-current reference input signal 25.

In the signal path 9, there is arranged a Q-current regulator 27. The Q-current regulator 27 delivers a voltage value Vq. This digital voltage is transmitted, in the signal path 9, to the 2/3 Park transformation unit 28 of the Park transformation device 21.

In a D-current regulator 29, a D-voltage Vd is computed from the values present at the fourth feedback point 24. This voltage Vd is transmitted to the 2/3 Park transformation unit 28.

In the 2/3 Park transformation unit 28, from the transmitted voltage values, three-phase voltages are computed as it is known in the art.

In a pulse width regulator 30, also arranged in the signal flow path 9, the output for the pulse width modulated signal output 3 is generated, using the signals coming in via the signal path 9.

Consequently, at the pulse width modulated signal output 3, a three-phase current is provided for driving the motor 4.

It can be seen that the interaction point 10 coincides with the third feedback point 23. Thus, the interaction point 10 is located at the third feedback point 23, while it is located downstream of the first feedback point 8 and the second feedback point 19.

In an alternative, instead of applying the arbitrary signal sequence 12 to the interaction point 10, this arbitrary signal sequence 12 may be applied to a second interaction point 31 located, in the signal path 9, downstream of both the first feedback point 8 and the second feedback point 19 but upstream of the third feedback point 23.

Alternatively or additionally, the arbitrary signal sequence 12 may be imposed on the signal path 9 using a third interaction point 33 located, in the signal path 9, at or downstream of the first feedback point 8 but upstream of the second feedback point 19 and the third feedback point 23.

In general, it may be said that the interaction points 10, 21, 23 that are most favorable for working the invention are located, in the signal path 9, downstream of a position regulator 33 and/or a speed regulator 34.

As can be seen from the drawing, favorable locations for the interaction points 31 and 32 may be between a regulator 33, 34 and its corresponding saturating unit 35. In the saturating units 35, large amplitudes or peaks of the signal are attenuated as it is known in the art.

The saturating units 35 may be provided using discrete and/or integrated electronic circuits and/or using program modules or parts in some software running on the drive controller 1.

Also, favorable locations of the interaction point 10, 31 may be characterized by being located downstream of the filtering elements 36.

At the interaction point 10, 31, or 32, the arbitrary signal sequence 12 may be added to the signal flowing in the signal path 9.

According to the invention, in the drive controller 1, it is provided that an arbitrary signal sequence 12 is imposed downstream, in the direction of 2 flow of the signal path 9 linking a position setpoint signal input 2 to a pulse width modulated signal output 3, of at least one feedback point 8 associated with a feedback loop 7 feeding back a quantity determined by the values and/or time curve of an actual position value 6 controlled by the drive controller 1 (Fig. 1).

## Claims

1. A drive controller (1), comprising a position setpoint signal input (2), a pulse width modulated signal output (3), a signal path (9) connecting the position setpoint signal input (2) to the pulse width modulated signal output (9), and a first feedback loop (7), the first feedback loop (7) acting, at a first feedback point (8), on a signal flow in the signal path (9), **characterized in that** the signal path (9) has at least one interaction point (10, 31, 32), the interaction point (10, 31, 32) being arranged in a direction of the signal flow at or downstream of the first feedback point (8), **in that** a signal generation means (11) is designed to generate an arbitrary signal sequence (12), and **in that** the signal generation (11) means is connected to the interaction point (10, 31, 32) to impose the arbitrary signal sequence (12) on the signal flow.

2. The drive controller (1) of claim 1, **characterized in that** the signal generation means (11) is designed to generate a pseudorandom and/or random sequence and/or **in that** the signal generation means (11) comprises a random and/or pseudorandom generator (13).

3. The drive controller (1) of claim 1 or 2, **characterized in that** the signal generation means (11), in particular the or a random and/or pseudorandom generator (13), comprises a measuring sensor (14) designed to measure at least one physical quantity, in particular at least one element from the group of a current, in particular a current in one phase of the modulated pulse width signal output, a voltage, a temperature, a speed, a magnetic field, and/or **in that** the signal generation means (11), in particular the or a random and/or pseudorandom generator (13), comprises an analog to digital converter (16) .

4. The drive controller (1) of any one of claims 1 to 3, **characterized in that** the signal generation means (11), in particular the or a random and/or pseudorandom generator (13), comprises an extracting means (17) designed to extract a predetermined number of digits from a multiple-digit number.

5. The drive controller (1) of any one of claims 1 to 4, **characterized in that** the first feedback loop (7) is a position feedback loop.

6. The drive controller (1) of any one of claims 1 to 5, **characterized in that** a second feedback loop (20) is designed to act, at a second feedback point (19) in the signal path (9), on the signal flow, in particular wherein the second feedback loop (20) is a speed feedback loop.

7. The drive controller (1) of claim 6, **characterized in that** the at least one interaction point (10, 31, 32) is arranged, in the or a direction of the signal flow (9), at or downstream of the second feedback point (19).

8. The drive controller of any one of claims 1 to 7, **characterized in that** a third feedback loop (22) is designed to act, at a third feedback point (23) in the signal path (9), on the signal flow, in particular wherein the third feedback loop (22) is a current, in particular a Q-current, and/or torque feedback loop.

9. The drive controller (1) of claim 8, **characterized in that** the at least one interaction point is arranged, in the or a direction of the signal flow, at or downstream of the third feedback point (23).

10. A method to modify an output signal of a drive controller (1), wherein a position setpoint input signal is processed along a signal path (9) of the drive controller (1) to yield a pulse width modulated output signal, wherein a first feedback signal is fed back, at a first feedback point (8), to a signal flow in the signal path (9), **characterized in that** an arbitrary signal sequence (12) is generated and imposed on the signal flow at or downstream of the first feedback point (8) .

11. The method of claim 10, **characterized in that** the arbitrary signal sequence (12) is generated as a pseudorandom and/or random sequence and/or **in that** the arbitrary signal sequence (12) is generated from an output signal of a measuring sensor (14) designed to measure a physical quantity.

12. The method of claim 10 or 11, **characterized in that** generating the arbitrary signal sequence (12) comprises the step of converting the or an output signal of the or a measuring sensor (14) designed to measure a physical quantity to a number, in particular a multiple-digit number, and/oder **in that** generating the arbitrary signal sequence (12) comprises the step of extracting a predetermined number of digits from the or a multiple-digit number.

13. The method of any one of claims 10 to 12, **characterized in that** a second feedback signal (20) is fed back, at a second feedback point (19) downstream, in the direction of the signal flow, of the first feedback point (8), to the signal flow in the signal path (9), wherein the arbitrary signal sequence (12) is generated and imposed on the signal flow at or downstream of the second feedback point (19).

14. The method of any one of claims 10 to 13, **characterized in that** a third feedback signal is fed back, at a third feedback point (23), downstream, in the direction of the signal flow, of the second feedback point (19), to the signal flow in the signal path (9), wherein the arbitrary signal sequence (12) is imposed on the signal flow at or downstream of the third feedback point (23).

15. The method of any one of claims 10 to 14, **characterized in that** the first, second, or third feedback signal is one element out of the group of position feedback signal, speed feedback signal, and current, in particular Q-current, and/or torque feedback signal and/or **in that** a drive controller (1) according to any one of claims 1 to 9 is used.

## Patentansprüche

1. Antriebssteuerung (1), die einen Positionssollwert-Signaleingang (2), einen pulsweitenmodulierten Signalausgang (3), einen Signalweg (9), der den Positionssollwert-Signaleingang (2) mit dem pulsweitenmodulierten Signalausgang (9) verbindet, und eine erste Rückkopplungsschleife (7) umfasst, wobei die erste Rückkopplungsschleife (7), an einem ersten Rückkopplungspunkt (8), auf einen Signalfluss in dem Signalweg (9) einwirkt, **dadurch gekennzeichnet, dass** der Signalweg (9) mindestens einen Interaktionspunkt (10, 31, 32) aufweist, wobei der Interaktionspunkt (10, 31, 32) in einer Richtung des Signalflusses an dem oder dem ersten Rückkopplungsschleifenpunkt (8) nachgeordnet angeordnet ist, dadurch, dass Signalerzeugungsmittel (11) ausgelegt sind, eine willkürliche Signalsequenz (12) zu generieren, und dadurch, dass die Signalerzeugungsmittel (11) mit dem Interaktionspunkt (10, 31, 32) verbunden sind, um die willkürliche Signalsequenz (12) auf dem Signalfluss einzuprägen.

2. Antriebssteuerung (1) nach Anspruch 1, **dadurch gekennzeichnet, dass** die Signalerzeugungsmittel (11) ausgelegt sind, eine Pseudozufalls- und/oder Zufallssequenz zu generieren, und/oder dadurch, dass die Signalerzeugungsmittel (11) einen Zufalls- und/oder Pseudozufallsgenerator (13) umfassen.

3. Antriebssteuerung (1) nach Anspruch 1 oder 2, **dadurch gekennzeichnet, dass** die Signalerzeugungsmittel (11), insbesondere der oder ein Zufalls- und/oder Pseudozufallsgenerator (13), einen Messsensor (14) umfassen, der ausgelegt ist, mindestens eine physikalische Größe, insbesondere mindestens ein Element aus der Gruppe bestehend aus einem Strom, insbesondere einem Strom in einer Phase des modulierten Pulsweiten-Signalausgangs, einer Spannung, einer Temperatur, einer Geschwindigkeit, einem magnetischen Feld zu messen, und/oder dadurch, dass die Signalerzeugungsmittel (11), insbesondere der oder ein Zufalls- und/oder Pseudozufallsgenerator (13), einen Analog-Digital-Wandler (16) umfassen.

4. Antriebssteuerung (1) nach einem der Ansprüche 1 bis 3, **dadurch gekennzeichnet, dass** die Signalerzeugungsmittel (11), insbesondere der oder ein Zufalls- und/oder Pseudozufallsgenerator (13), Extraktionsmittel (17) umfassen, die ausgelegt sind, eine vorbestimmte Anzahl von Stellen aus einer vielstelligen Zahl zu extrahieren.

5. Antriebssteuerung (1) nach einem der Ansprüche 1 bis 4, **dadurch gekennzeichnet, dass** die erste Rückkopplungsschleife (7) eine Positionsrückkopplungsschleife ist.

6. Antriebssteuerung (1) nach einem der Ansprüche 1 bis 5, **dadurch gekennzeichnet, dass** eine zweite Rückkopplungsschleife (20) ausgelegt ist, an einem zweiten Rückkopplungspunkt (19) in dem Signalweg (9), auf den Signalfluss einzuwirken, wobei die zweite Rückkopplungsschleife (20) insbesondere eine Geschwindigkeitsrückkopplungsschleife ist.

7. Antriebssteuerung (1) nach Anspruch 6, **dadurch gekennzeichnet, dass** der mindestens eine Interaktionspunkt (10, 31, 32), in der oder einer Richtung des Signalflusses (9), an dem oder dem zweiten Rückkopplungspunkt (19) nachgeordnet angeordnet ist.

8. Antriebssteuerung nach einem der Ansprüche 1 bis 7, **dadurch gekennzeichnet, dass** eine dritte Rückkopplungsschleife (22) ausgelegt ist, an einem dritten Rückkopplungspunkt (23) in dem Signalweg (9) auf den Signalfluss einzuwirken, insbesondere wobei die dritte Rückkopplungsschleife (22) eine Strom-, insbesondere eine Q-Strom-, und/oder eine Drehmoment-Rückkopplungsschleife ist.

9. Antriebssteuerung (1) nach Anspruch 8, **dadurch gekennzeichnet, dass** der mindestens eine Interaktionspunkt, in der oder einer Richtung des Signalflusses, an dem oder dem dritten Rückkopplungspunkt (23) nachgeordnet angeordnet ist.

10. Verfahren zur Modifizierung eines Ausgangssignals einer Antriebssteuerung (1), wobei ein Positionssollwert-Eingangssignal entlang eines Signalwegs (9) der Antriebssteuerung (1) verarbeitet wird, um ein pulsweitenmoduliertes Ausgangssignal hervorzubringen, wobei ein erstes Rückkopplungssignal, an einem ersten Rückkopplungspunkt (8), zu einem Signalfluss in dem Signalweg (9) zurückgeführt wird, **dadurch gekennzeichnet, dass** eine willkürliche Signalsequenz (12) generiert wird und an dem oder dem ersten Rückkopplungspunkt (8) nachgeordnet auf dem Signalfluss eingeprägt wird.

11. Verfahren nach Anspruch 10, **dadurch gekennzeichnet, dass** die willkürliche Signalsequenz (12) als eine Pseudozufalls- und/oder Zufallssequenz generiert wird, und/oder dadurch, dass die willkürliche Signalsequenz (12) aus einem Ausgangssignal eines Messsensors (14) generiert wird, der ausgelegt ist, eine physikalische Größe zu messen.

12. Verfahren nach Anspruch 10 oder 11, **dadurch gekennzeichnet, dass** Generieren der willkürlichen Signalsequenz (12) den Schritt Konvertieren des oder eines Ausgangssignals des oder eines Messsensors (14), der ausgelegt ist, eine physikalische Größe zu messen, zu einer Zahl, insbesondere einer vielstelligen Zahl, umfasst, und/oder dadurch, dass Generieren der willkürlichen Signalsequenz (12) den Schritt Extrahieren einer vorbestimmten Anzahl von Stellen aus der oder einer vielstelligen Zahl umfasst.

13. Verfahren nach einem der Ansprüche 10 bis 12, **dadurch gekennzeichnet, dass** ein zweites Rückkopplungssignal (20), an einem zweiten Rückkopplungspunkt (19), der dem ersten Rückkopplungspunkt (8) in der Richtung des Signalflusses nachgeordnet ist, zu dem Signalfluss in dem Signalweg (9) zurückgeführt wird, wobei die willkürliche Signalsequenz (12) generiert wird und an dem oder dem zweiten Rückkopplungspunkt (19) nachgeordnet auf dem Signalfluss eingeprägt wird.

14. Verfahren nach einem der Ansprüche 10 bis 13, **dadurch gekennzeichnet, dass** ein drittes Rückkopplungssignal, an einem dritten Rückkopplungspunkt (23), der dem zweiten Rückkopplungspunkt (19) in der Richtung des Signalflusses nachgeordnet ist, zu dem Signalfluss in dem Signalweg (9) zurückgeführt wird, wobei die willkürliche Signalsequenz (12) an dem oder dem dritten Rückkopplungspunkt (23) nachgeordnet auf dem Signalfluss eingeprägt wird.

15. Verfahren nach einem der Ansprüche 10 bis 14, **dadurch gekennzeichnet, dass** das erste, zweite oder dritte Rückkopplungssignal ein Element aus der Gruppe bestehend aus Positionsrückkopplungssignal, Geschwindigkeitsrückkopplungssignal und Strom-, insbesondere einem Q-Strom-, und/oder Drehmoment-Rückkopplungssignal ist und/oder dadurch, dass eine Antriebssteuerung (1) nach einem der Ansprüche 1 bis 9 verwendet wird.

## Revendications

1. Contrôleur d'entraînement (1), comprenant une entrée de signal de consigne de position (2), une sortie de signal modulé en largeur d'impulsion (3), un chemin de signal (9) reliant l'entrée de signal de consigne de position (2) à la sortie de signal modulé en largeur d'impulsion (9), et une première boucle de contre-réaction (7), la première boucle de contre-réaction (7) agissant, au niveau d'un premier point de contre-réaction (8), sur un flux de signal dans le chemin du signal (9), **caractérisé en ce que** le chemin de signal (9) comporte au moins un point d'interaction (10, 31, 32), le point d'interaction (10, 31, 32) étant agencé dans un sens du flux de signal au niveau ou en aval du premier point de contre-réaction (8), **en ce qu'**un moyen de génération de signal (11) est conçu pour générer une séquence de signal arbitraire (12), et **en ce que** le moyen de génération de signal (11) est connecté au point d'interaction (10, 31, 32) pour imposer la séquence de signal arbitraire (12) sur le flux de signal.

2. Contrôleur d'entraînement (1) selon la revendication 1, **caractérisé en ce que** le moyen de génération de signal (11) est conçu pour générer une séquence pseudo-aléatoire et/ou aléatoire et/ou **en ce que** le moyen de génération de signal (11) comprend un générateur aléatoire et/ou pseudo-aléatoire (13).

3. Contrôleur d'entraînement (1) selon la revendication 1 ou 2, **caractérisé en ce que** le moyen de génération de signal (11), en particulier le ou un générateur aléatoire et/ou pseudo-aléatoire (13), comprend un capteur de mesure (14) conçu pour mesurer au moins une quantité physique, en particulier au moins un élément du groupe d'un courant, en particulier un courant dans une phase de la sortie de signal modulé en largeur d'impulsion, une tension, une température, une vitesse, un champ magnétique, et/ou **en ce que** le moyen de génération de signal (11), en particulier le ou un générateur aléatoire et/ou pseudo-aléatoire (13), comprend un convertisseur analogique/numérique (16).

4. Contrôleur d'entraînement (1) selon l'une quelconque des revendications 1 à 3, **caractérisé en ce que** le moyen de génération de signal (11), en particulier le ou un générateur aléatoire et/ou pseudo-aléatoire (13), comprend un moyen d'extraction (17) conçu pour extraire un nombre prédéterminé de chiffres d'un nombre à chiffres multiples.

5. Contrôleur d'entraînement (1) selon l'une quelconque des revendications 1 à 4, **caractérisé en ce que** la première boucle de contre-réaction (7) est une boucle de contre-réaction de position.

6. Contrôleur d'entraînement (1) selon l'une quelconque des revendications 1 à 5, **caractérisé en ce qu'**une deuxième boucle de contre-réaction (20) est conçue pour agir, au niveau d'un deuxième point de contre-réaction (19) dans le chemin de signal (1), sur le flux de signal, en particulier dans lequel la deuxième boucle de contre-réaction (20) est une boucle de contre-réaction de vitesse.

7. Contrôleur d'entraînement (1) selon la revendication 6, **caractérisé en ce que** l'au moins un point d'interaction (10, 31, 32) est agencé, dans le sens du flux de signal (9), au niveau ou en aval du deuxième point de contre-réaction (19).

8. Contrôleur d'entraînement selon l'une quelconque des revendications 1 à 7, **caractérisé en ce qu'**une troisième boucle de contre-réaction (22) est conçue pour agir, au niveau d'un troisième point de contre-réaction (23) dans le chemin de signal (9), sur le flux de signal, en particulier dans lequel la troisième boucle de contre-réaction (22) est une boucle de contre-réaction de courant, en particulier de courant Q, et/ou de couple.

9. Contrôleur d'entraînement (1) selon la revendication 8, **caractérisé en ce que** l'au moins un point d'interaction est agencé, dans le ou un sens du flux de signal, au niveau ou en aval du troisième point de contre-réaction (23).

10. Procédé de modification d'un signal de sortie d'un contrôleur d'entraînement (1), dans lequel un signal d'entrée de consigne de position est traité le long d'un chemin de signal (9) du contrôleur d'entraînement (1) pour produire un signal de sortie en largeur d'impulsion, dans lequel un premier signal de contre-réaction est renvoyé, au niveau d'un premier point de contre-réaction (8), vers un flux de signal dans le chemin de signal (9), **caractérisé en ce qu'**une séquence de signal arbitraire (12) est générée et imposée sur le flux de signal au niveau ou en aval du premier point de contre-réaction (8) .

11. Procédé selon la revendication 10, **caractérisé en ce que** la séquence de signal arbitraire (12) est générée sous forme de séquence pseudo-aléatoire et/ou aléatoire et/ou **en ce que** la séquence de signal arbitraire (12) est générée à partir d'un signal de sortie d'un capteur de mesure (14) conçu pour mesurer une quantité physique.

12. Procédé selon la revendication 10 au 11, **caractérisé en ce que** la génération de la séquence de signal arbitraire (12) comprend l'étape de conversion du ou d'un signal de sortie du ou d'un capteur de mesure (14) conçu pour mesurer une quantité physique en un nombre, en particulier un nombre à chiffres multiples, et/ou **en ce que** la génération de la séquence de signal arbitraire (12) comprend l'étape d'extraction d'un nombre prédéterminé de chiffres du ou d'un nombre à chiffres multiples.

13. Procédé selon l'une quelconque des revendications 10 à 12, **caractérisé en ce qu'**un deuxième signal de contre-réaction (25) est renvoyé, au niveau d'un deuxième point de contre-réaction (19) en aval, dans le sens du flux de signal, du premier point de contre-réaction (8), vers le flux de signal dans le chemin de signal (9), dans lequel la séquence de signal arbitraire (12) est générée et imposée sur le flux de signal au niveau ou en aval du deuxième point de contre-réaction (19).

14. Procédé selon l'une quelconque des revendications 10 à 13, **caractérisé en ce qu'**un troisième signal de contre-réaction est renvoyé, au niveau d'un troisième point de contre-réaction (23) en aval, dans le sens du flux de signal, du deuxième point de contre-réaction (19), vers le flux de signal dans le chemin de signal (9), dans lequel la séquence de signal arbitraire (12) est générée et imposée sur le flux de signal au niveau ou en aval du troisième point de contre-réaction (23).

15. Procédé selon l'une quelconque des revendications 10 à 14, **caractérisé en ce que** le premier, deuxième ou troisième signal de contre-réaction est un élément du groupe comportant un signal de contre-réaction de position, un signal de contre-réaction de vitesse, et un signal de contre-réaction de courant, en particulier de courant Q, et/ou de couple et/ou **en ce qu'**un contrôleur d'entraînement (1) selon l'une quelconque des revendications 1 à 9 est utilisé.
